# EUROPEAN PATENT SPECIFICATION

(11) **EP 0 864 762 B1**
(45) Date of publication and mention of the grant of the patent: **14.05.2003**
(21) Application number: 98301857.3
(22) Date of filing: 12.03.1998
(51) Int. Cl.: F15B 13/08

(54) **Sealed change-over valve assembly**
Abgedichtete Umschaltventilanordnung
Agencement de vanne de commutation étanche

(30) Priority: 14.03.1997 JP 8198297
(43) Date of publication of application: 16.09.1998
(73) Proprietor: SMC CORPORATION, Minato-ku Tokyo 105 (JP)
(72) Inventor: Kaneko, Ryushiro, Tsukuba-gun, Ibaraki (JP); Ishikawa, Makoto, Tsukuba-gun, Ibaraki (JP); Narita, Masaru, Tsukuba-gun, Ibaraki (JP)
(74) Representative: Findlay, Alice Rosemary

(56) References cited:
- EP-A- 0 719 949
- EP-A- 0 810 394
- DE-A- 4 305 608
- DE-A- 4 336 208
- US-A- 3 111 149
- US-A- 4 707 763

## Description

The present invention relates to a sealed transfer valve assembly that has improved insulating capabilities by creating an air-tight seal of electrical connections.

It is known to provide a transfer valve assembly that couples a solenoid-operated pilot transfer valve, in which a solenoid-operated pilot valve operates a main valve for switching channels for an operating fluid, to a manifold for supplying operating fluid and power to the transfer valve.

In such a transfer valve assembly, when an electrical connection that supplies power to the solenoid in a pilot valve, or a mounting portion for electrical parts such as power supply indicator lamps, is left exposed, its insulating capabilities may deteriorate if the transfer valve operates in a humid environment, resulting in leakage or open circuits. Such deterioration leads to hazardous conditions.

Efforts have been made to find a solution to this difficulty, an example of which is Japanese Patent Application No. 4-272583 which discloses a transfer valve assembly in which the connection between a supply connector in the manifold and a receiving connector in the transfer valve is sealed by an air-tight sealing article. However, the method used to provide the air-tight seal calls for pressing the tip of a housing for the receiving connector against a gasket. The seal thus created is subject to deterioration if any looseness exists in the mounting of the transfer valve to the manifold. In addition, to provide air-tight connections, a simple method is needed mounting power supply indicator lamps or related electrical parts on the transfer valve not requiring lead connections.

EP-A-0719949 describes a highly integrated sector valve. The valve comprises a plurality of valve mechanisms incorporated vertically in multiple stages in a valve body and a plurality of such composite type valves are joined in a lateral direction and are connected together. Each valve comprises a terminal strip with wiring printed on its surface and comprising electrical parts such as an indicator lamp in addition to power feeding terminals and power receiving terminals.

It is a technical object of this invention to provide a transfer valve assembly with improved insulating capabilities formed by mounting a solenoid-operated pilot transfer valve on a manifold using a simple method to form air-tight seals of the connection between the transfer valve and manifold and the mounting portion for electrical parts, such as power supply indicator lamps.

The invention provides a sealed transfer valve as defined in Claim 1.

The invention enables the electrical connection between the transfer valve and the manifold, to be reliably sealed, thereby improving insulation, as well as the mounting portion of electrical parts, such as the indicator lamps.

According to a preferred embodiment, the receiving connector in the transfer valve has a cylindrical housing and a number of pin-like receiving terminals; the receiving connector in the manifold has a number of supply terminals placed in a depression in which the housing is fitted, so that the supply terminals contact the receiving terminals; and the sealing member provided at the opening edge of the depression forms an air-tight seal against the outer surface of the solenoid section and the outer circumferential surface of the housing.

This configuration allows increased reliability in the seal of the connection between supply and receiving connectors, compared to conventional transfer valves. According to another specific example of this invention, the rear end of each receiving terminal projects toward the rear surface of the solenoid section, the lamp circuit board having connection holes in which the receiving terminals are fitted. This example of the invention also has printed wiring that connect the receiving terminals and lamps.

According to one embodiment, the transfer valve is of a double-pilot type, having two pilot valves and two solenoids in the two pilot valves, integrally sealed in the solenoid section of the transfer valve.

According to another embodiment, the transfer valve is of a single-pilot type, having one pilot valve and one solenoid and one dummy member having substantially the same shape and size as the solenoid, integrally sealed in the solenoid section of the transfer valve.

The invention will now be further described by way of example with reference to the accompanying drawings in which:
FIG. 1 is a vertical disassembled sectional view showing a first embodiment of this invention.
FIG. 2 is an enlarged sectional view showing an integral part of a transfer valve.
FIG. 3 is an exploded perspective view showing an integral part of the transfer valve.
FIG. 4 is a vertical sectional view of a transfer valve according to a second embodiment.
FIG. 5 is a perspective view showing an example of an operational phase of a transfer assembly of this invention.

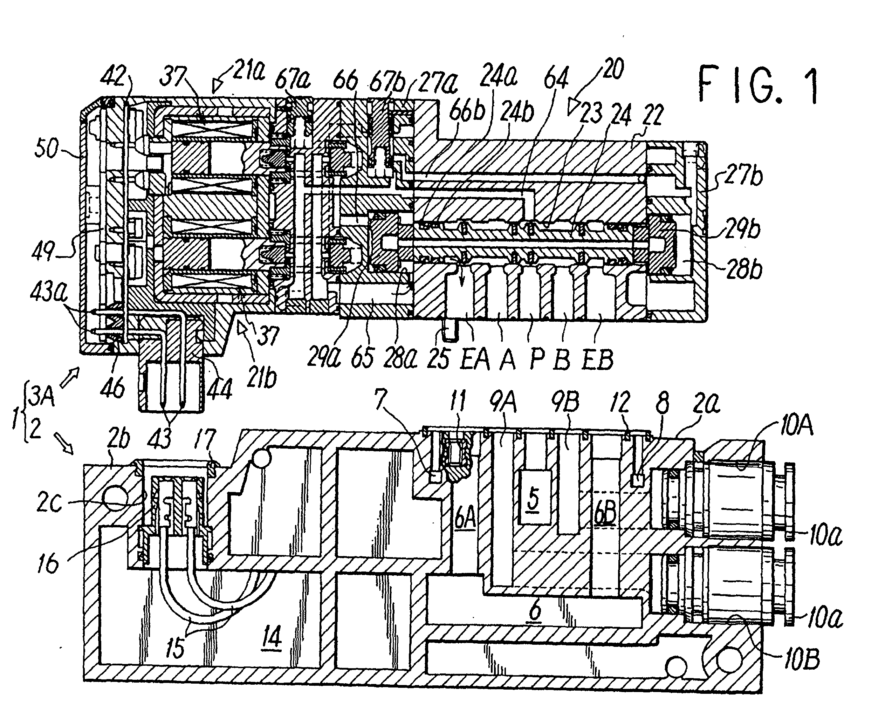

FIG. 1 shows a first embodiment, disassembled, of a sealed transfer valve assembly. The sealed transfer valve assembly 1 is composed of a divided manifold 2 for each transfer valve and a solenoid-operated pilot transfer valve 3A mounted on a valve mounting surface 2a of manifold 2.

Manifold 2 comprises a supply channel 5 and an ejection channel 6 for a pressure fluid formed in the manifold connection direction (perpendicular to the plane of the drawing), and an external pilot supply channel 7 and external pilot ejection channel 8 used to introduce a pilot fluid from the exterior. Supply channel 5, pilot supply channel 7, and pilot ejection channel 8 are all opened to valve mounting surface 2a, while ejection channel 6 opens to valve mounting surface 2a at two positions through channels 6A and 6B.

Output channels 9A and 9B for a pressure fluid communicate with openings in valve mounting surface 2a and with output ports 10A and 10B on the front surface of manifold 2. A quick pipe joint 10a used to connect tubes is attached to output ports 10A and 10B.

A number of nuts 11 (only one is shown) used to mount a transfer valve 3A using screw 25 and gasket 12 surrounding the opening of each of the channels are provided in valve mounting surface 2a of manifold 2.

In addition, a low stage portion 2b below valve mounting 2a is formed at the rear end of the surface, and a depression 2c is formed in the low stage portion 2b, with a supply connector 16 provided in depression 2c. One of a number of supply lines 15 inserted into a wiring passage 14 passing through manifold 2 in its connection direction is connected to supply connector 16 so as to connect to a solenoid in transfer valve 3A, mounted on manifold 2; and a frame-like sealing article 17 is provided in the opening edge of depression 2c to seal the connection between supply connector 16 and receiving connector 44 in transfer valve 3A.

Transfer valve 3A is of a double-pilot type, in which a main valve 20, switching channels for an operating fluid, is operated by two solenoid-operated pilot valves 21a and 21b, mounted together at one end of a valve body 22 in main valve 20.

The valve body 22 of the main valve 20 comprises a supply port P, output ports A and B, and ejection ports EA and EB, all used for a pressure fluid opening to the bottom surface (on which manifold base 2 is installed); a valve hole 23 into which these ports open; a spool valve member 24 inserted into valve hole 23; and a number of set screws 25 used to mount the transfer valve on manifold 2.

A first plate 27a and a pilot valve body 32 are mounted on one side of valve body 22, while a second plate 27b is mounted on the other side in an air-tight manner, using appropriate means such as set screws. In addition, a first piston 29a is inserted so as to permit sliding in an air-tight manner into a first piston chamber 28a formed in first plate 27a, while a second piston 29b is inserted so as to permit sliding in an air-tight manner into a second piston chamber 28b formed in second plate 27b and having the same diameter as the first piston chamber.

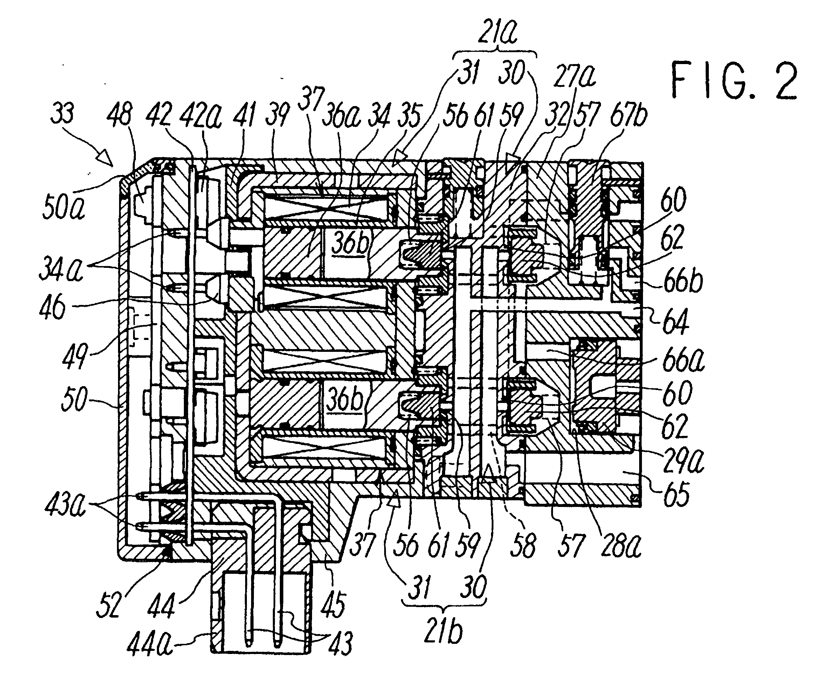

Pilot valves 21a and 21b each consist of a valve opening and closing section 30 that switches the channels for a pilot fluid, and a solenoid 31 that operates the valve opening and closing section 30, as shown in FIG. 2. The two valve opening and closing sections 30, 30 in both pilot valves 21a and 21b are integrally assembled into pilot valve body 32, and the two solenoids 31, 31 are integrally embedded in sealing synthetic resin 45, to constitute a solenoid section 33.

The configuration of solenoid section 33 and solenoid 31 is described in greater detail. In mold solenoid 31, a coil assembly 37 having bobbin 35 around which coil 34 is wound, a fixed-iron core 36a and a movable-iron core 36b mounted at one end of the center hole of bobbin 35, and coil terminals 34a, 34a shaped like a pair of pins and leading to coil 34, are accommodated inside a magnetic frame 39, so that solenoids 31, 31 in the two pilot valves 21a and 21b share the single magnetic frame 39. That is, the two coil assemblies 37, 37 in both pilot valves 21a and 21b are accommodated in parallel in rectangular magnetic frame 39 to integrate the two solenoids 31, 31.

In addition, in solenoid section 33, solenoids 31, 31, the receiving connector 44 containing within a cylindrical housing 44a four pin-like receiving terminals 43 in "L" shape, and a wiring board 42 having printed wiring for transmitting power between receiving terminals 43 and coil terminal 34a, are integrally sealed into synthetic resin 45. On wiring board 42, the solenoids and connector are mounted on the magnetic frame 39 via a mounting plate 41 consisting of a non-magnetic substance, and electronics 42a, such as Zener diodes, are mounted on wiring board 42.

Projecting from the bottom surface of solenoid section 33 toward valve mounting surface 2a, receiving connector 44 is fitted in depression 2c to connect to supply connector 16. The rear end 43a of each receiving terminal 43 projects toward the rear surface of solenoid section 33, and rubber caps 46 are fitted on the projecting sections.

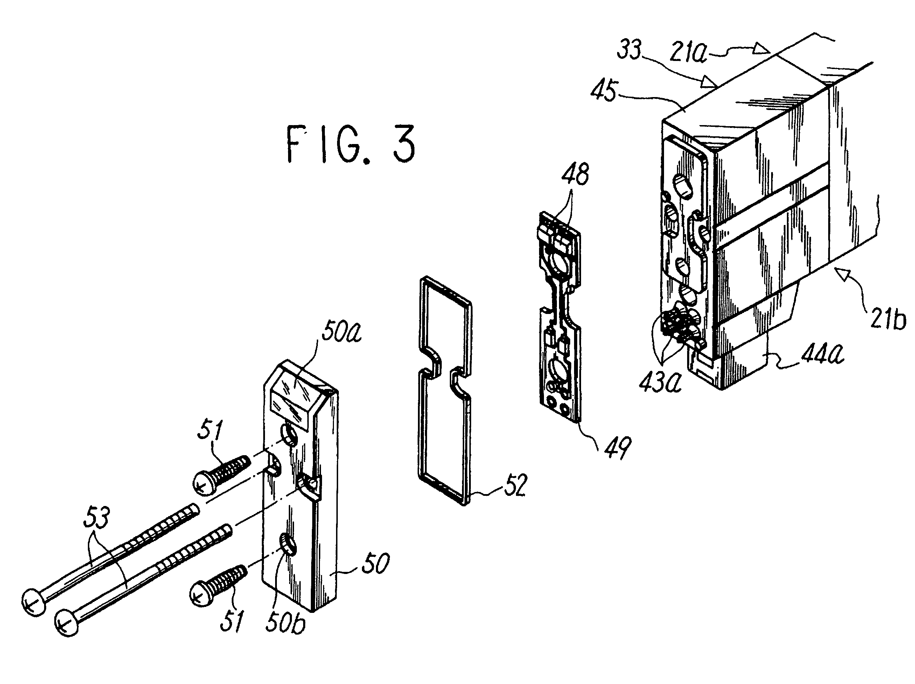

As shown in FIG. 3, a lamp circuit board 49 and a cover 50 forming an air-tight seal of the lamp circuit board are mounted on the rear surface of solenoid section 33. Lamp circuit board 49 has two power supply indicator lamps 48 corresponding to pilot valves 21a and 21b, connection holes in which the rear ends 43a of receiving terminals 43 are fitted, and printed wiring for connecting receiving terminals 43 and lamp 48. In addition, cover 50 has a transparent portion 50a at a position opposite to lamp 48 and is fixed to solenoid section 33 via rectangular gasket 52 using screws 51. Ideally, a sealing article is also provided in mounting hole 50b, in which the head of screw 51 is fitted.

Thus, solenoid section 33 on which lamp circuit 49 and lamp cover 50 are mounted is mounted on pilot valve body 32 in an air-tight manner using set screws 53.

Solenoid 31, lamp 48, lamp circuit board 49, and the connection between receiving terminals 43 and the lamp circuit board 4a in pilot valves 21a and 21b are completely sealed by synthetic resin 45 and lamp cover 50, and prevented from exposure to outside air. Even in high-humidity environments, transfer valve assembly 1 operates protected from open circuits resulting from leakage or corrosion.

A pilot supply valve chamber 56 and a pilot output valve chamber 57 are formed opposite movable-iron cores 36b in pilot valves 21a and 21b, respectively, and communicate through penetrating channels 58 formed through pilot valve body 32. In addition, pilot supply valve seat 59 and pilot ejection valve seat 60 are formed in these valve chambers.

A pilot supply valve disc 61, which opens and closes pilot supply valve seat 59, and a pilot ejection valve disc 62, which opens and closes pilot ejection valve seat 60, are compelled by valve springs in the direction in which they close the corresponding valve seats, and are connected through a bar-like member (not shown) loosely inserted into penetrating channel 58. These valve discs are associated so as to cause the pilot ejection valve disc 62 to close pilot ejection valve seat 60 when pilot supply valve disc 61 opens pilot supply valve seats 59, and while causing pilot ejection valve disc 62 to open pilot ejection valve seat 60 when the pilot supply valve disc 61 closes pilot supply valve seat 59.

In addition, when power to coil 34 is turned off, the compelling force of a return spring for movable-iron core 36b causes pilot supply valve disc 61 to close pilot supply valve seat 59.

The pilot supply valve seat 59 communicates with supply port P in main valve 20 through a pilot supply passage 64 formed in pilot valve body 32, first plate 27a, and valve body 22. In addition, pilot ejection valve seat 60 communicates with the chamber between first piston 29a and valve hole 23 through a pilot ejection passage 65 formed in pilot valve body 32 and first plate 27a, and with ejection port EA via the gap between valve hole 23 and a check seal 24a and wear ring 24b fitted in valve disc 24.

When the ejection air pressure of a pilot fluid exceeds the air pressure of ejection port EA, check seal 24a reduces the lip diameter to permit ejection of pilot fluid, and otherwise increases the lip diameter to shut off communications with ejection port EA.

Pilot output valve chamber 57 on the side of first pilot valve 21a communicates with first piston chamber 28a through pilot output passage 66a. Pilot output valve chamber 57 on the side of second pilot valve 21b communicates with second piston chamber 28b through pilot output passage 66b.

Reference numbers 67a and 67b in FIG. 1 indicate manually operated items that are pressed to supply pilot fluid to first piston chamber 28a and second piston chamber 28b when service interruption prevents the solenoid 31 from driving valve disc 24.

Transfer valve assembly 1 in the above configuration is assembled by placing transfer valve 3A on valve mounting surface 2a of manifold 2 and screwing screw 25 in the nut. In this case, the receiving connector 44 is fitted in depression 2c to connect to supply connector 16, the sealing article 17 is pressed against the outer circumference of housing 44a for receiving connector 44 and the outer surface of synthetic resin 45 in solenoid section 33 to form an air-tight seal against outside air for the connection between connectors 44 and 16.

In transfer valve assembly 1, when power is supplied to coil 34 in first pilot valve 21a, pilot fluid is supplied to first piston chamber 28a, moving valve disc 24 to the right in the figure and allowing supply port P to communicate with output port A, and output port B to communicate with ejection port EB.

If power to first pilot valve 21a is turned off and power is supplied to coil 34 in second pilot valve 21b, pilot air in first piston chamber 28a is ejected to the exterior, while pilot fluid is supplied to second piston chamber 28b, moving valve disc 24 to the left in the figure and allowing supply port P to communicate with output port B, and output port A to communicate with ejection port EA.

In this case, power supply to coil 34 can be visually checked from the exterior, since the lighting of lamps 48 serves as an indicator.

Although transfer valve 3A is of an internal pilot type in which a pilot fluid branches from supply port P, an external pilot transfer valve that introduces pilot fluid from an external source can also be used. The external pilot transfer valve differs from the internal pilot transfer valve in that pilot supply passage 64 is omitted. In its place, another pilot supply channel is formed to communicate with external pilot supply channel 7 in manifold 2.

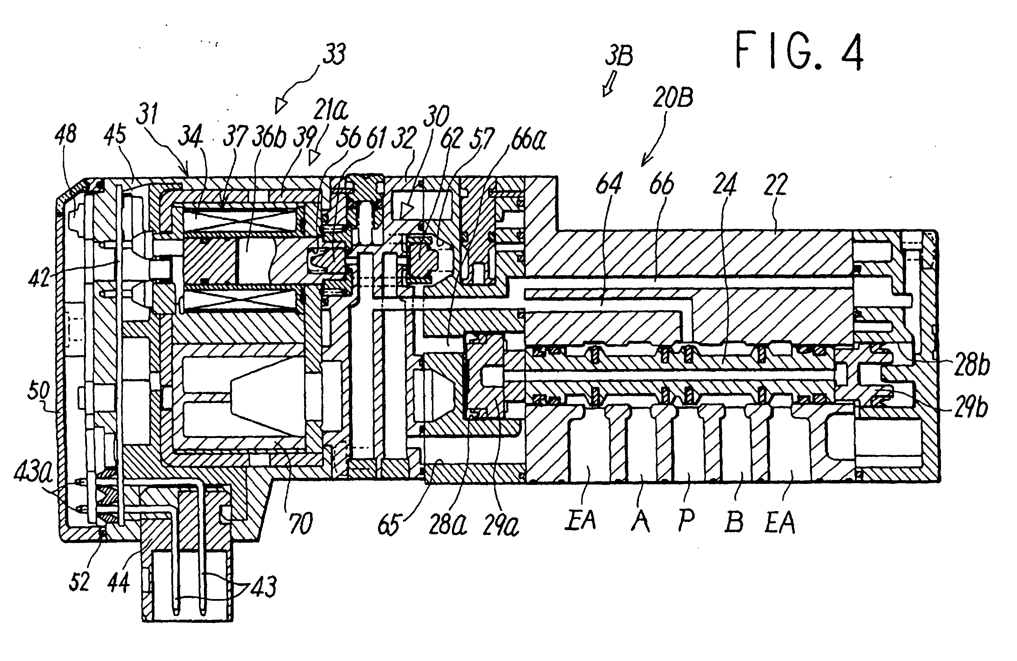

FIG. 4 shows a second embodiment of the transfer valve in the sealed transfer valve assembly according to this invention. Transfer valve 3B is a single-pilot type having a single-pilot valve 21a, shaped similarly to transfer valve 3A, using as many parts as possible in common with transfer valve 3A.

Main valve 20B in transfer valve 3B has substantially the same configuration as main valve 20 in the first embodiment, except that second piston chamber 28b and second piston 29b have smaller diameters than first piston chamber 28a and second piston 29a, and that second piston chamber 28b communicates directly with pilot supply passage 64 through pilot output passage 66. Thus, analogous components in the figure bear the same reference numbers. Their description is omitted.

In addition, one valve opening and closing section 30 is integrated into pilot valve body 32, and one solenoid 31 and one dummy member 70 are integrated into solenoid section 33. That is, in solenoid section 33, one coil assembly 37 and dummy member 70 having substantially the same shape and size as coil assembly 37 are assembled into magnetic frame 39 of the same configuration as in the first embodiment, and this assembly is sealed into synthetic resin 45 with wiring board 42 and receiving connector 44. The other configuration is substantially the same as in the first embodiment.

Thus, except for dummy member 70, this embodiment uses the same parts as the first embodiment, reducing the number of different parts used.

According to the second embodiment, a pilot fluid is allowed to act persistently on small-diameter second piston 29b through pilot output passage 66, and pilot valve 21a is turned on and off to supply and eject a pilot fluid to and from large-diameter first piston 29a in order to switch valve member 24 in main valve 20B.

Although transfer valves 3A and 3B according to these embodiments both have five ports, the transfer valve according to this invention may also be of a four-port type having two output ports and one ejection port, or a three-port type having one supply port, one output port, and one ejection port.

If the transfer valve is of a four- or three-port type, the manifold base must have a number of channels and openings matching the number of ports in this transfer valve.

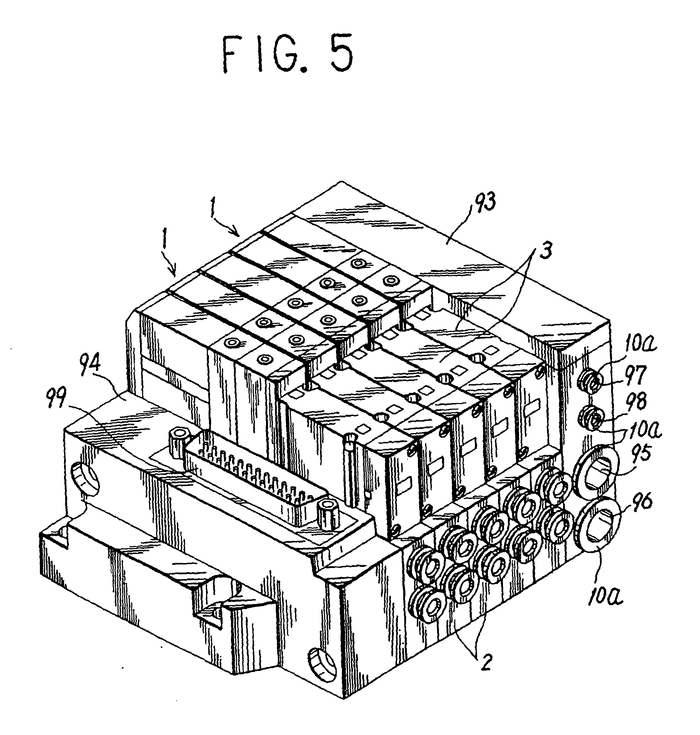

FIG. 5 shows an example of an operational phase of the transfer valve assembly according to this invention. In this example, five transfer valve assemblies 1, piping block 93 having a supply port 95 and ejection port 96, and wiring block 94 having multi-pole connector 99 for electrical connections, are integrally connected with the appropriate means, such as connection bolts. A pressure fluid such as compressed air is collectively supplied to the transfer valve assemblies 1 through piping block 93, while power is collectively supplied by wiring block 93. In FIG. 5, reference number 97 denotes an external pilot supply port, 98 is an external pilot ejection port, and 10 is a pipe joint.

## Claims

1. A sealed transfer valve assembly (1) comprising
- a manifold (2) for supplying operating fluid to a valve and having a valve mounting surface (2A) and a supply connector (16) for supplying power to a valve,
- a solenoid-operated pilot transfer valve (3A,3B) comprising a main valve (20,20B) for switching channels for an operating fluid, at least one solenoid-operated pilot valve (21a, 21b) for operating the main valve (20, 20B), each at least one solenoid-operated pilot valve (21a,21b) having a valve opening and closing section (30) for switching channels for a pilot fluid, and a solenoid (31) that operates the valve opening and closing section (30), said at least one solenoid-operated pilot valve (21 a,21 b) being mounted at one end of the main valve (20,20B), the solenoid-operated pilot transfer valve (3A,3B) further comprising a receiving connector (44) having at least one receiving terminal (43) and a wiring circuit board (42) for transmitting power between the at least one receiving terminal (43) and the at least one solenoid (31),
the solenoid-operated pilot transfer valve (3A,3B) being mounted on the valve mounting surface (2A), and the receiving connector (44) being connected to the supply connector (16) in an air tight manner by means of a sealing member (17) provided in either the manifold (2) or the transfer valve (3A,3B) for supplying power to the at least one solenoid (31), the at least one solenoid (31)mounted in and sharing a single magnetic frame (29), the wiring circuit board (42) and the receiving connector (44) defining a solenoid section (33) on which outer surface a cover (50) is mounted in an air-tight manner,
**characterised in that**
the components (31,42,44) of the solenoid section (33) are mounted on the magnetic frame (39) via a mounting plate (41) of a non magnetic substance and said solenoid section (33) is integrally sealed into a synthetic resin (45),
and, **in that** a separate lamp circuit board (49) having a number of power supply indicator lamps (48) corresponding to the number of pilot valves (21a,21b) is mounted on the outer surface of the solenoid section (33), within the cover (50), in order to receive power from the receiving terminals (43) projecting towards the outer surface of the solenoid section (33).

2. An assembly as claimed in Claim 1, wherein the cover (50) entirely covers the lamp circuit board (49).

3. An assembly as claimed in either Claims 1 or 2, wherein the receiving connector (44) in the transfer valve (3A, 3B) has a cylindrical housing (44a) projecting from the solenoid section (33) and the receiving terminals (34a) are accommodated in the housing (44a), wherein the receiving connector (44) in the manifold (2) has a number of supply terminals (43) provided in a depression in which the housing (44a) is fitted, so that the supply terminals (43) contact the receiving terminals (34a), and wherein the sealing member (52) is provided at the opening edge of the said depression to form an air-tight seal against the outer surface of the solenoid section (33) and outer circumferential surface of the housing (44a).

4. An assembly as claimed in Claim 3, wherein the rear end of each receiving terminal (34a) in the transfer valve (3A, 3B) projects toward the rear surface of the solenoid section (33), wherein the lamp circuit board (49) mounted on the rear surface has connection holes in which the rear ends of the receiving terminals (34a) are fitted and printed wiring for connecting the receiving terminals (34a) and at least one lamp (48), and wherein the cover (50) has a transparent portion over, at minimum, those positions corresponding to the at least one lamp (48).

5. An assembly as claimed in any preceding claim, wherein the transfer valve (3A, 3B) is of a double-pilot type having two pilot valves (21a, 21b), and two solenoids (31) in the two pilot valves (21a, 21b) are integrally sealed in the solenoid section (33) of the transfer valve (3A, 3B).

6. An assembly as claimed in any preceding claim, wherein the transfer valve (3A, 3B) is of a single-pilot type (38) having one pilot valve (21a), and one solenoid (31) and one dummy member (70) having substantially the same shape and size as the solenoid (31) are integrally sealed in said solenoid section (33) of the transfer valve (3A, 3B).

## Patentansprüche

1. Abgedichtete Umschaltventilanordnung (1), bestehend aus
- einer mit einer Ventilmontagefläche (2A) und einer Steckbuchse (16) zur Stromversorgung eines Ventils versehenen Unterplatte (2) für die Zuleitung von Arbeitsfluid zu einem Ventil,
- einem magnetbetätigten vorgesteuerten Umschaltventil (3A, 3B), umfassend ein Hauptventil (20, 20B) zum Schalten von Kanälen für ein Arbeitsfluid, mindestens ein magnetbetätigtes Vorsteuerventil (21a, 21b) zum Betätigen des Hauptventils (20, 20B), wobei dieses mindestens eine magnetbetätigte Vorsteuerventil (21a, 21b) je ein Ventilöffnungs- und -schließteil (30) zum Schalten von Kanälen für ein Arbeitsfluid und einen Betätigungsmagnet (31) zum Betätigen des Ventilöffnungs- und -schließteils (30) aufweist und das mindestens eine magnetbetätigte Vorsteuerventil (21a, 21b) auf einer Seite des Hauptventils (20, 20B) montiert ist, und als weitere Bestandteile des magnetbetätigten vorgesteuerten Umschaltventils (3A, 3B) einen Stecker (44) mit mindestens einem Anschlusspol (43) und eine Verdrahtungsleiterplatte (42) zur Stromübertragung zwischen dem mindestens einen Anschlusspol (43) und dem mindestens einen Betätigungsmagnet (31),
wobei das magnetbetätigte vorgesteuerte Umschaltventil (3A, 3B) auf der Ventilmontagefläche (2A) montiert ist und der Stecker (44) zwecks Stromversorgung des mindestens einen Betätigungsmagnets (31) mit der Steckbuchse (16) mittels eines entweder an der Unterplatte (2) oder am Umschaltventil (3A, 3B) angebrachten Dichtungselements (17) luftdicht verbunden ist, der mindestens eine Betätigungsmagnet (31) in einem einzigen Magnetrahmen (29) montiert ist und die Verdrahtungsleiterplatte (42) und der Stecker (44) ein Magnetteil (33) definieren, an dessen Außenseite eine Abdeckung (50) luftdicht montiert ist,
**dadurch gekennzeichnet, dass**
die Bestandteile (31, 42, 44) des Magnetteils (33) auf dem Magnetrahmen (39) mittels eines aus einem nichtmagnetischen Werkstoff bestehenden Befestigungsbleches (41) montiert sind und das Magnetteil (33) in einem Kunstharzelement (45) integral abgedichtet ist, und weiterhin **dadurch gekennzeichnet, dass** an der Außenseite des Magnetteils (33) innerhalb der Abdeckung (50) eine separate Lampenleiterplatte (49) mit mehreren Stromversorgungsanzeigelampen (48) entsprechend der Anzahl von Vorsteuerventilen (21a, 21b) so montiert ist, dass sie von den zur Außenseite des Magnetteils (33) vorstehenden Anschlusspolen (43) mit Strom versorgt wird.

2. Anordnung nach Anspruch 1, bei der die Abdeckung (50) die Lampenleiterplatte (49) vollständig abdeckt.

3. Anordnung nach Anspruch 1 oder 2, bei der der Stecker (44) am Umschaltventil (3A, 3B) ein vom Magnetteil (33) vorstehendes zylindrisches Gehäuse (44a) hat und die Anschlusspole (34a) im Gehäuse (44a) untergebracht sind; bei der der Stecker (44) in der Unterplatte (2) in einer Vertiefung, in die das Gehäuse (44a) eingesetzt wird, mehrere Pole (43) aufweist, so dass die Pole (43) die Anschlusspole (34a) berühren; und bei der sich das Dichtungselement (52) an der Mündungskante dieser Vertiefung befindet und so eine luftdichte Abdichtung gegen die Außenfläche des Magnetteils (33) und die äußere Mantelfläche des Gehäuses (44a) bildet.

4. Anordnung nach Anspruch 3, bei der das hintere Ende jedes Anschlusspols (34a) im Umschaltventil (3A, 3B) zur Rückseite des Magnetteils (33) vorsteht; bei der die an der Rückseite montierte Lampenleiterplatte (49) Anschlussföcher zum Einführen der hinteren Enden der Anschlusspole (34a) und eine gedruckte Verdrahtung zur Verbindung der Anschlusspole (34a) und der mindestens einen Lampe (48) aufweist; und bei der die Abdeckung (50) einen durchsichtigen Teil über mindestens den Stellen hat, wo sich die mindestens eine Lampe (48) befindet.

5. Anordnung nach einem der vorhergehenden Ansprüche, bei der das Umschaltventil (3A, 3B) vom Doppelvorsteuerventiltyp mit zwei Vorsteuerventiten (21a, 21b) ist und zwei Betätigungsmagnete (31) in den beiden Vorsteuerventilen (21a, 21b) im Magnetteil (33) des Umschaltventils (3A, 3B) integral abgedichtet sind.

6. Anordnung nach einem der vorhergehenden Ansprüche, bei der das Umschaltventil (3A, 3B) vom Einfachvorsteuerventiltyp (38) mit einem Vorsteuerventil (21a) ist und ein Betätigungsmagnet (31) und ein Blindelement (70) von etwa gleicher Form und Größe wie der Betätigungsmagnet (31) im Magnetteil (33) des Umschaitventils (3A, 3B) integral abgedichtet sind.

## Revendications

1. Ensemble vanne de transfert scellée (1) comprenant :
- un collecteur (2) pour fournir un fluide de commande à une vanne et ayant une surface de montage de vanne (2A) et un connecteur d'alimentation (16) pour fournir un courant électrique à une vanne,
- une électrovanne de transfert pilote (3A, 3B) comprenant une vanne principale (20, 20B) pour changer les conduits pour un fluide de commande, au moins une électrovanne pilote (21a, 21b) pour actionner la vanne principale (20, 20B), chaque ou l'électrovanne pilote (21a, 21b) ayant une section d'ouverture et de fermeture (30) de la vanne pour changer les conduits de passage d'un fluide pilote, et un solénoïde (31) qui commande la section d'ouverture et fermeture (30) de la vanne, la ou lesdites électrovannes pilotes (21a, 21b) étant montées à une extrémité de la vanne principale (20, 20b), l'électrovanne de transfert pilote (3A, 3B) comprenant en outre un connecteur récepteur (44) ayant au moins une borne de réception (43) et une carte de circuits de câblage (42) pour transmettre le courant entre la ou les bornes de réception (43) et le ou les solénoïdes (31),
l'électrovanne de transfert pilote (3A, 3B) étant montée sur la surface de montage de vanne (2A) et le connecteur récepteur (44) étant connecté au connecteur d'alimentation (16) de manière étanche à l'air au moyen d'un élément d'étanchéité (17) prévu soit dans le collecteur (2) soit dans la vanne de transfert (3A, 3B) pour fournir le courant au ou aux solénoïdes (31), le ou les solénoïdes (31) étant montés dans un seul bâti magnétique (29) qu'ils partagent, la carte de circuits de câblage (42) et le connecteur récepteur (44) définissant une section de solénoïde (33), un couvercle (50) étant monté de manière étanche à l'air sur cette surface extérieure,
**caractérisé en ce que**
les composants (31, 42, 44) de la section solénoïde (33) sont montés sur le bâti magnétique (39) par l'intermédiaire d'une plaque de montage (41) en substance non magnétique, et ladite section solénoïde (33) est intégralement scellée dans une résine synthétique (45),
et **en ce qu'**une carte de circuit de lampes témoins séparée (49) ayant un certain nombre de lampes témoins d'alimentation (48) correspondant au nombre de vannes pilotes (21a, 21b) est montée sur la surface extérieure de la section solénoïde (33), à l'intérieur du couvercle (50), afin de recevoir le courant électrique des bornes de réception (43) faisant saillie vers la surface extérieure de la section solénoïde (33).

2. Ensemble selon la revendication 1, dans lequel le couvercle (50) couvre entièrement la carte de circuit de lampes témoins (49).

3. Ensemble selon les revendications 1 ou 2, dans lequel le connecteur récepteur (44) dans la vanne de transfert (3A, 3B) a un boîtier cylindrique (44a) dépassant de la section solénoïde (33) et les bornes de réception (34a) sont logées dans le logement (44a), dans lequel le connecteur récepteur (44) dans le collecteur (2) a un certain nombre de bornes d'alimentation (43) prévues dans un creux dans lequel est monté le logement (44a), de telle sorte que les bornes d'alimentation (43) sont en contact avec les bornes de réception (34a), et dans lequel l'élément d'étanchéité (52) est prévu au bord ouvrant dudit creux pour former un joint étanche à l'air contre la surface extérieure de la section solénoïde (33) et la surface périphérique extérieure du logement (44a).

4. Ensemble selon la revendication 3, dans lequel l'extrémité arrière de chaque borne de réception (34a) dans la vanne de transfert (3A, 3B) dépasse vers la surface arrière de la section solénoïde (33), dans lequel la carte de circuit de lampes-témoins (49) montée sur la surface arrière comporte des trous de connexion dans lesquels sont disposées les extrémités arrière des bornes de réception (34a) et un câblage imprimé pour connecter les bornes de réception (34a) et au moins une lampe témoin (48), et dans lequel le couvercle (50) a une partie transparente couvrant au moins les positions correspondant à ladite ou aux dites lampes témoins (48).

5. Ensemble selon l'une quelconque des revendications précédentes, dans lequel la vanne de transfert (3A, 3B) est du type à double pilote, ayant deux vannes pilotes (21a, 21b), et deux solénoïdes (31) dans les deux vannes pilotes (21a, 21b) sont intégralement scellées dans la section solénoïde (33) de la vanne de transfert (3A, 3B).

6. Ensemble selon l'une quelconque des revendications précédentes, dans lequel la vanne de transfert (3A, 3B) est du type simple pilote (38) ayant une vanne pilote (21a), et un solénoïde (31) et un élément factice (70) ayant sensiblement la même forme et la même taille que le solénoïde (31) sont intégralement scellés dans ladite section solénoïde (33) de la vanne de transfert (3A, 3B).
